# FASCICULE DE BREVET EUROPEEN

(11) **EP 1 468 132 B1**
(45) Date de publication et mention de la délivrance du brevet: **01.02.2006**
(21) Numéro de dépôt: 03706357.5
(22) Date de dépôt: 15.01.2003
(51) Int. Cl.: D02G 3/48

(54) **CABLES HYBRIDES, UN PROCEDE POUR LEUR OBTENTION ET TISSUS COMPOSITES LES INCORPORANT**
HYBRIDES KABEL, VERFAHREN ZU DESSEN HERSTELLUNG UND VERBUNDGEWEBE DASSELBE ENTHALTEND
HYBRID CORDS, METHOD FOR OBTAINING SAME AND COMPOSITE FABRICS INCORPORATING SAME

(30) Priorité: 17.01.2002 FR 0200571
(43) Date de publication de la demande: 20.10.2004
(73) Titulaire: Société de Technologie Michelin, 63000 Clermont-Ferrand (FR); MICHELIN RECHERCHE ET TECHNIQUE S.A., 1763 Granges-Paccot (CH)
(72) Inventeur: ESNAULT, Philippe, Greenville, SC 29615 (US); PACHERIE, Hubert, F-63100 Clermont-Ferrand (FR); CHAVAROCHE, Pierre, F-63100 Clermont-Ferrand (FR); FICKINGER, Pascal, F-63130 Royat (FR); MUS, Jean-Marie, F-63200 MARSAT (FR)
(74) Mandataire: Ribière, Joel
(86) Numéro de dépôt international: PCT/EP2003/000311
(87) Numéro de publication internationale: WO 2003/060212

(56) Documents cités:
- EP-A- 0 335 588
- EP-A- 0 542 567
- EP-A- 0 661 179
- DE-A- 4 135 599

## Description

La présente invention concerne des câbles hybrides, un procédé pour leur obtention et un tissu composite utilisable dans un pneumatique qui incorpore lesdits câbles. L'invention concerne également un pneumatique et un ensemble monté qui incorporent chacun un tel tissu composite.

Le développement des pneumatiques destinés à équiper des véhicules de tourisme de type roulant à des vitesses élevées a suscité la mise au point d'architectures toujours plus performantes pour ces pneumatiques.

Une solution classiquement utilisée pour ces architectures de pneumatiques « haute vitesse » consiste à couvrir les nappes sommet de travail de ces pneumatiques, qui comportent des éléments de renforcement métalliques ou textiles, par une nappe sommet dite de frettage, usuellement renforcée par des câbles textiles. Cette nappe sommet de frettage, qui est par exemple disposée radialement à l'extérieur de l'armature de sommet du pneumatique, est notamment caractérisée en ce que les câbles qui la renforcent sont disposés en spirale selon un angle de 0° ou proche de 0° avec le plan circonférentiel médian du pneumatique. Il est également connu de disposer des bandelelettes ou des nappes relativement étroites selon un angle d'environ 0° à la place des câbles précités, pour remplir une fonction de frettage de l'armature de sommet.

A titre de câbles textiles pour nappe sommet de frettage, on a testé par le passé des câbles hybrides de type retors, qui sont constitués de deux fils à base de matériaux respectivement de bas et haut modules initiaux qui sont tordus ensemble, en vue de conférer au câble ainsi obtenu un module en extension réduit à faible déformation et au contraire élevé à forte déformation. Ce découplage des modules en extension du câble se traduit par la présence d'un point de transition sur la courbe force-allongement dudit câble, et il est par exemple obtenu en utilisant un polyamide 6,6 pour le matériau de bas module et de l'aramide pour celui de haut module initial.

Pour la description de tels câbles hybrides, on pourra se référer au document de brevet américain US-A-3 977 172 et au compte-rendu de la conférence Kautschuk + Gummi Kunststoffe, vol. 40, n° 2, février 1987, pages 130-135, à Heidelberg (Allemagne), E. R. Barron, intitulée « hybrid tire cords containing kevlar® aramid ».

Un inconvénient majeur de ces câbles hybrides à structure retordue réside dans la tension de frettage excessive que présente la nappe comportant ces câbles, y compris à des vitesses réduites typiquement inférieures à 120 km/h, (i.e. à des déformations relativement faibles). II résulte de cette tension ou «raidissement» prématuré des câbles un bruit de roulage dû au pneumatique qui est significatif à ces vitesses, ce qui représente une source notable d'inconfort pour les occupants du véhicule.

Le but de la présente invention est de remédier à cet inconvénient, et il est atteint en ce que les demanderesses viennent d'obtenir d'une manière surprenante des câbles hybrides présentant chacun un rapport (module tangent final/ module tangent initial) supérieur à 10, ce qui permet par exemple de renforcer une nappe sommet de frettage d'un pneumatique de telle manière que :
- à des déformations réduites inhérentes à une vitesse de roulage inférieure à 100 ou 120 km/h, la nappe sommet de frettage engendre un bruit de roulage réduit, et que
- à des déformations élevées inhérentes à une vitesse de roulage typiquement supérieure à 120 km/h, cette nappe sommet assure sa fonction de frettage d'une manière satisfaisante.

On notera que la valeur du rapport (module tangent final/ module tangent initial) qui caractérise les câbles hybrides selon l'invention est supérieure à celles des mêmes rapports caractérisant les câbles hybrides obtenus à ce jour, qui sont toujours inférieures à 10.

Avantageusement, ce rapport est supérieur à 12 pour les câbles hybrides selon l'invention, et il est par exemple compris entre 12 et 30.

On notera que la présente invention n'est nullement limitée à une utilisation en nappe sommet de frettage de ces câbles hybrides, et qu'elle englobe toute utilisation dans des pneumatiques pouvant être de type tourisme ou destinés à porter de lourdes charges, par exemple des pneumatiques poids-lourd, agricole ou de génie civil.

On notera également que les câbles hybrides selon l'invention permettent d'améliorer l'endurance à vitesse élevée (typiquement supérieure à 120 km/h) de l'armature de sommet de pneumatiques dont la nappe sommet de frettage est renforcée par ces câbles.

Par « câble hybride », on entend dans la présente description un câble composite, i.e. constitué d'au moins deux matériaux de nature et/ou de propriétés différentes.

Par « module tangent initial » du câble hybride selon l'invention, on entend dans la présente description la pente de la tangente à la courbe force/ allongement de ce câble correspondant à un allongement nul.

Par « module tangent final » de ce câble hybride, on entend la pente de la tangente à la courbe force/ allongement dudit câble pour un allongement correspondant à sa rupture.

On notera que les câbles hybrides selon l'invention présentent chacun une courbe force/ allongement qui est très proche du tracé des tangentes précitées à cette courbe correspondant respectivement à un allongement nul et à la rupture du câble, ce qui se traduit par un découplage des modules tangents dudit câble à faibles et fortes déformations (i.e. à des vitesses de roulage respectivement réduites et élevées).

Selon un mode préférentiel de réalisation de l'invention, lesdits câbles hybrides sont de type guipés, comportant une âme textile de module initial inférieur à 900 cN/tex et une guipe textile de module initial supérieur à 1300 cN/tex qui est enroulée sur ladite âme.

Par « module initial » de l'âme ou de la guipe, on entend dans la présente description le module en extension à basse déformation de chacun de ces constituants qui a au préalable été extrait du câble hybride guipé. Ce module initial est défini comme étant la pente de la partie linéaire de la courbe force/ allongement de l'âme ou de la guipe à l'état écru, mesurée juste après une prétension standard de 0,5 cN/tex.

Lesdits modules initiaux et lesdits modules tangents, ainsi que l'ensemble des propriétés mécaniques en extension mentionnées dans la présente description (ténacité, allongement à la rupture, notamment) sont mesurés de manière connue au moyen de mesures de type force (daN)/ allongement (%), réalisées au moyen d'une machine « INSTRON » avec pinces « 4D » et en utilisant les paramètres opératoires suivants :
- longueur de traction : 400 mm,
- vitesse de traction : 200 mm/min,
- prétension standard : 0,5 cN/tex.

Par câble guipé, on entend par définition dans la présente description une âme « droite » sur laquelle est enroulée une guipe, par exemple en hélice. On pourra par exemple se reporter aux documents de brevet américains US-A-4 343 343 et US-A-4 893 665 pour la description de câbles guipés répondant à cette définition.

Par l'expression « âme droite » (usuellement désignée en Anglais par le terme « core » ou core yarn »), on entend un fil unique ou plusieurs fils tordus ensemble sur laquelle vient s'enrouler la guipe (souvent désignée en Anglais par le terme « sheath » ou « sheath yarn »), laquelle est également constituée d'un fil unique ou de plusieurs fils tordus ensemble. L'assemblage de la guipe sur l'âme est donc réalisé sans opération de retordage de ces deux constituants, à la différence des câbles à structure retordue précités.

Dans la présente description, le terme « fil » désigne aussi bien un filé à base d'une multitude de filaments élémentaires de faible diamètre qui sont tordus ensemble (par exemple un filé à base d'une centaine de filaments élémentaires présentant chacun un diamètre voisin d'une dizaine de microns), qu'un unique monofilament.

Par monofilament, on entend un filament unitaire (non tordu par définition) dont le diamètre ou l'épaisseur D (i.e. la plus petite dimension transversale de sa section droite lorsque celle-ci n'est pas circulaire) est au moins égal(e) à 40 µm (titre minimal de 1,7 tex). Cette définition couvre donc aussi bien des monofilaments de forme essentiellement cylindrique (i.e, à section circulaire) que des monofilaments oblongs, de forme aplatie, ou encore des bandelettes ou films d'épaisseur D.

Selon un exemple de réalisation dudit mode préférentiel selon l'invention, le câble hybride guipé est tel que ladite âme est constituée d'un filé unique et que ladite guipe est constituée d'un ou de plusieurs filés tordus ensemble, de préférence de deux à quatre filés tordus ensemble. Dans ce cas, on a imposé au filé formant l'âme une torsion de l'ordre de plusieurs dizaines voire plusieurs centaines de tours/mètre, avant de procéder à l'enroulement de la guipe sur ladite âme.

Selon un autre exemple de réalisation dudit mode préférentiel selon l'invention, le câble hybride guipé est tel que ladite âme est constituée de plusieurs filés tordus ensemble et que ladite guipe est constituée d'un ou de plusieurs filés tordus ensemble.

Selon un autre exemple de réalisation dudit mode préférentiel selon l'invention, le câble hybride guipé est tel que ladite âme est constituée d'un monofilament et que ladite guipe est constituée d'un filé unique ou de plusieurs filés tordus ensemble.

Selon un autre exemple de réalisation dudit mode préférentiel selon l'invention, le câble hybride guipé est tel que ladite âme est constituée d'un filé unique ou de plusieurs filés tordus ensemble et que ladite guipe est constituée d'un monofilament.

Selon un autre exemple de réalisation dudit mode préférentiel selon l'invention, le câble hybride guipé est tel que ladite âme et ladite guipe sont chacune constituées d'un monofilament.

Dans la présente description, le titre des filés a été déterminé sur au moins trois échantillons, chacun correspondant à une longueur de 50 m, par pesée de cette longueur de filé. Le titre est donné en tex (poids en g de 1000 m de filé - rappel: 0,111 tex égal à 1 denier).

La ténacité (force-rupture divisée par le titre) et les divers modules d'extension sont indiqués en cN/tex (1 cN/tex = 0, 11 g/den). L'allongement à la rupture est indiqué en %.

A titre non limitatif, l'âme du câble hybride guipé de l'invention peut être constituée :
- d'un polyamide aliphatique, tel qu'un polyamide 6,6,
- d'un polyester aliphatique, tel que le polyéthylène téréphtalate (PET), le polyéthylène naphtalate (PEN), ou
- de rayonne.

La guipe du câble hybride guipé selon l'invention peut être par exemple constituée :
- d'un polyamide aromatique, tel que l'aramide, ou
- d'un polyester aromatique, tel que le polyester commercialisé sous la dénomination « VECTRA », ou encore
- d'une cellulose ou d'un dérivé de cellulose d'origine cristal-liquide à haut module initial (notamment supérieur à 1500 cN/tex), tels que décrits par exemple dans les documents de brevet WO-A-85/05115, WO-A-96/09356, WO-A-97/06294.

Selon un exemple de réalisation dudit mode de préférentiel selon l'invention, le câble hybride guipé comporte une âme en polyamide aliphatique, tel qu'un polyamide 6,6, et une guipe en polyamide aromatique, tel que l'aramide, ou en cellulose à haut module d'origine cristal-liquide.

Selon une autre caractéristique dudit mode préférentiel selon l'invention, le câble hybride guipé est tel que ladite âme présente un allongement à la rupture supérieur à 10 %.

Selon une autre caractéristique dudit mode préférentiel selon l'invention, le câble hybride guipé présente une courbe force (daN)/ allongement (%) présentant un point de transition, en deçà duquel le module en extension du câble est sensiblement égal à celui de l'âme et au-delà duquel le module en extension de ce câble est sensiblement égal à celui de la guipe, ce point de transition correspondant à un allongement compris entre 1 et 7 %, de préférence compris entre 2 et 4 %.

De manière connue, on appelle « point de transition » (ou point de changement de pente) le point correspondant à l'allongement pour lequel les deux tangentes à allongement nul et à la rupture se croisent.

Le câble hybride guipé selon ledit mode préférentiel de réalisation de l'invention est obtenu par un procédé consistant essentiellement à :
- obtenir séparément une âme et une guipe formées chacune d'un fil unique ou de plusieurs fils tordus ensemble, puis
- à enrouler, par exemple en hélice, la guipe sur l'âme, de telle sorte que le pas de torsion de l'âme dans le câble guipé soit supérieur à celui de la guipe.

Cet assemblage est par exemple réalisé au moyen d'un dispositif de câblage volumétrique et d'un métier de type à anneaux.

Un tissu composite selon l'invention comporte une composition de caoutchouc à base d'au moins un élastomère diénique qui est renforcée par lesdits câbles hybrides selon l'invention (i.e. présentant chacun un rapport (module tangent final/ module tangent initial) supérieur à 10), et ce tissu composite est utilisable avantageusement dans un pneumatique.

Par élastomère diénique, on entend de manière connue un élastomère issu au moins en partie (i.e. un homopolymère ou un copolymère) de monomères diènes c'est-à-dire de monomères porteurs de deux doubles liaisons carbone-carbone, conjuguées ou non.

De préférence, cette composition de caoutchouc est à base d'au moins un élastomère diénique dont le taux molaire d'unités issues de diènes conjugués est supérieur à 15 % (un tel élastomère diénique est communément dit « essentiellement insaturé »).

C'est ainsi, par exemple, que des élastomères diéniques tels que les caoutchoucs butyle ou les copolymères de diènes et d'alpha-oléfines de type EPDM n'entrent pas dans la définition précédente et peuvent être qualifiés d'élastomères diéniques "essentiellement saturés" (taux molaire d'unités issues de diènes toujours inférieur à 15 %).

A titre encore plus préférentiel, cette composition de caoutchouc est à base d'au moins un élastomère diénique dont le taux molaire d'unités issues de diènes conjugués est supérieur à 50 % (un tel élastomère diénique est communément appelé "fortement insaturé"). Cet élastomère diénique est alors préférentiellement choisi dans le groupe constitué par les polybutadiènes, le caoutchouc naturel, les polyisoprènes de synthèse, les différents copolymères de butadiène, les différents copolymères d'isoprène, et les mélanges de ces élastomères.

Parmi les polybutadiènes, conviennent en particulier ceux ayant une teneur en unités - 1,2 comprise entre 4% et 80% ou ceux ayant une teneur en cis-1,4 supérieure à 80%.

Parmi les polyisoprènes de synthèse, conviennent en particulier les cis-1,4-polyisoprènes, de préférence ceux ayant un taux de liaisons cis-1,4 supérieur à 90%.

Parmi les copolymères de butadiène ou d'isoprène, on entend en particulier les copolymères obtenus par copolymérisation d'au moins l'un de ces deux monomères avec un ou plusieurs composés vinylaromatique ayant de 8 à 20 atomes de carbone. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. Les copolymères peuvent contenir entre 99% et 20% en poids d'unités diéniques et entre 1% et 80% en poids d'unités vinylaromatiques.

Parmi les copolymères de butadiène ou d'isoprène ci-dessus, on citera préférentiellement les copolymères de butadiène-styrène, les copolymères d'isoprène-butadiène, les copolymères d'isoprène-styrène ou les copolymères d'isoprène-butadiène-styrène.

En résumé, convient de préférence un élastomère diénique choisi dans le groupe des élastomères diéniques « fortement insaturés » constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères.

Avantageusement, la composition de caoutchouc du tissu composite selon l'invention comprend à titre majoritaire (i.e. selon une fraction massique supérieure à 50 %) ou en totalité un ou plusieurs élastomères diéniques « fortement insaturés » tels que définis ci-dessus, éventuellement en association avec un ou plusieurs élastomères diéniques « essentiellement saturés » ou non diéniques utilisés à titre minoritaire, et/ou en association avec des polymères autres que des élastomères (par exemple des polymères thermoplastiques) également utilisés à titre minoritaire.

Les compositions de caoutchouc des tissus composites conformes à l'invention comportent également tout ou partie des additifs habituellement utilisés dans la fabrication de pneumatiques, tels que des charges renforçantes comme le noir de carbone ou la silice, des agents anti-vieillissement, par exemple des antioxydants, des huiles d'extension, des plastifiants ou des agents facilitant la mise en oeuvre des compositions à l'état cru, un système de réticulation à base soit de soufre, soit de donneurs de soufre et/ou de peroxyde, des accélérateurs, des activateurs ou retardateurs de vulcanisation, des accepteurs et donneurs de méthylène, des résines, des systèmes promoteurs d'adhésion connus du type "RFS" (résorcinol-formaldéhyde-silice) ou sels métalliques, notamment sels de cobalt.

Le tissu composite selon l'invention peut se présenter sous des formes variées, par exemple sous la forme d'une nappe, d'une bande, bandelette ou d'un bloc de caoutchouc dans lequel est incorporé le renfort métallique à l'aide de différents moyens connus de l'homme du métier, tels que par exemple des moyens de moulage, de calandrage ou de boudinage.

Un pneumatique selon un premier mode de réalisation de la présente invention comporte un sommet qui est prolongé par deux flancs et deux bourrelets et qui comporte une nappe carcasse ancrée dans lesdits bourrelets, ledit sommet comportant :
- au moins une nappe sommet de renforcement comportant des câbles parallèles qui sont orientés par rapport à la direction circonférentielle d'un angle α compris entre 10 et 45 degrés, et
- au moins une nappe sommet de frettage comportant des câbles orientés selon ladite direction circonférentielle qui sont enroulés en spirale,

et ce pneumatique est tel que ladite nappe sommet de frettage est constituée du tissu composite selon l'invention tel que défini précédemment.

Selon un exemple de réalisation de ce premier mode selon l'invention, ce pneumatique est tel que ladite nappe sommet de frettage est disposée radialement à l'extérieur de ladite ou desdites nappes sommet de renforcement.

Selon un autre exemple de réalisation de ce premier mode selon l'invention, ce pneumatique est tel que ladite nappe sommet de frettage est disposée radialement à l'intérieur de ladite nappe carcasse.

Selon un autre exemple de réalisation de ce premier mode selon l'invention, ce pneumatique est tel que ledit sommet comporte au moins deux nappes sommet de renforcement superposées comportant chacune des câbles parallèles qui sont croisés d'une nappe à l'autre en faisant avec ladite direction circonférentielle des angles (α, β) compris entre 10 et 45 degrés, et que ladite nappe sommet de frettage est disposée entre lesdites nappes sommet de renforcement.

Selon un autre exemple de réalisation de ce premier mode selon l'invention, ce pneumatique est tel que ledit sommet comporte au moins deux nappes sommet de renforcement superposées comportant chacune des câbles parallèles qui sont croisés d'une nappe à l'autre en faisant avec ladite direction circonférentielle des angles (α, β) compris entre 10 et 45 degrés, et tel que ladite nappe sommet de frettage est disposée entre ladite nappe carcasse et la nappe sommet de renforcement qui est disposée le plus radialement à l'intérieur.

En référence à l'un quelconque de ces exemples de réalisation dudit premier mode selon l'invention, ledit pneumatique est avantageusement tel que, sur toute sa largeur, les câbles hybrides de ladite nappe sommet de frettage présentent un potentiel de contraction à chaud (CS), à l'état vulcanisé et neuf dudit pneumatique, qui est inférieur ou égal au potentiel de contraction à chaud de ces mêmes câbles adhérisés avant leur incorporation dans ladite nappe sommet de frettage.

Les demanderesses ont constaté que cette caractéristique de potentiel de contraction à chaud des câbles hybrides de la nappe sommet de frettage permet de réduire d'une manière encore plus marquée le bruit de roulement du pneumatique à vitesse réduite, tout en lui conférant un haut niveau de résistance à haute vitesse.

Les câbles hybrides posés circonférentiellement avec des diamètres de pose s'écartant, sur toute la largeur du sommet, de moins de 0,5 % des diamètres finaux de ces câbles dans le pneumatique après vulcanisation, ne subissent au cours de la confection du pneumatique ou de sa vulcanisation aucune opération de conformation notable. Une telle conformation notable entraînerait par exemple, lors de la confection ou de la vulcanisation, une extension locale de ces câbles supérieure à 2 ou 3 %. Cette extension affecte généralement les propriétés des câbles ainsi déformés, notamment leur module, leur potentiel de contraction et leur état de tension.

II en résulte que les câbles hybrides utilisés sont, dans le pneumatique vulcanisé et sur l'ensemble de la nappe, dans un état très proche de celui des câbles adhérisés avant leur mise en pneumatique.

On entend par « câbles adhérisés » des câbles ayant subi un traitement d'enduction approprié, dit d'encollage ou d'adhérisation, susceptible de les faire adhérer, après un traitement thermique approprié, à la composition de caoutchouc précitée. Les câbles sont encollés en une succession d'étapes par passage dans des bains de colle typiques de l'état de l'art, et traité thermiquement sous une tension permettant de leur conférer le niveau de potentiel de contraction (CS) requis.

On entend par « potentiel de contraction à chaud » (CS), la variation relative de longueur d'un renfort textile positionné, sous une prétension égale à la demi-somme des titres de chacun des brins élémentaires, entre les plateaux d'un four (appareil du type TESTRITE) régulé à une température constante de 185 ± 0,5° C. Ce potentiel est exprimé en % par la formule suivante : CS (%) = 100 × | L₁ - L₀ | /L₀ où L₀ est la longueur initiale du renfort adhérisé, à la température ambiante sous une prétension égale à la demi somme des titres de chacun des brins élémentaires et L₁ la longueur de ce même renfort à 185° C. La longueur L₁ est mesurée au bout d'une durée de stabilisation du renfort à la température de 185° C, égale à 120 s ± 2 %. L'écart type sur la mesure de CS est de ± 0,15 %.

Ce potentiel est directement la conséquence de l'ensemble des opérations que le renfort a subi lors de son élaboration ou lors de sa mise en oeuvre.

Le potentiel de contraction à chaud des câbles hybrides selon l'invention avant leur incorporation dans le pneumatique est préférentiellement supérieur à 0,5 % et encore plus préférentiellement supérieur à 1 %.

Après vulcanisation d'un pneumatique selon l'invention, on a réalisé une extraction de plusieurs tronçons de câbles hybrides de la nappe sommet de frettage et l'on a mesuré immédiatement (c'est-à-dire que l'intervalle de temps séparant l'extraction des câbles de l'introduction de ces mêmes câbles dans le four du TESTRITE est inférieur à 60 secondes) leur potentiel de contraction à chaud. Ces mesures ont confirmé que la valeur de leur CS est bien inférieure ou égale à celle qu'ils avaient avant leur introduction dans le pneumatique, quelle que soit leur position axiale dans le pneumatique.

Selon un mode de réalisation selon l'invention, la confection du pneumatique selon l'invention peut avantageusement être réalisée sur un noyau rigide imposant la forme de sa cavité intérieure, tels ceux décrits dans les documents de brevet EP-A-242 840 ou EP-A-822 047. On applique sur ce noyau, dans l'ordre requis par l'architecture finale, tous les constituants du pneumatique, qui sont disposés directement à leur place finale, sans subir de conformation à aucun moment de la confection. La cuisson s'effectue sur noyau, celui-ci n'étant retiré qu'après la phase de vulcanisation.

Ce mode de fabrication a l'avantage de réduire fortement voire d'éliminer les précontraintes imposées aux câbles, particulièrement aux câbles hybrides orientés à 0°, lors des phases traditionnelles de conformation.

On peut aussi refroidir partiellement le bandage sur le noyau pour maintenir les renforts dans l'état de déformation imposé lors de la pose.

Selon un autre mode de réalisation de l'invention, on peut, d'une manière équivalente, fabriquer le pneumatique sur un tambour tel que décrit dans les documents de brevet WO-A-97/47 463 ou EP-A-718 090, à condition de réaliser la conformation de l'ébauche du pneumatique avant d'effectuer la pose des câbles hybrides orientés circonférentiellement.

Selon un autre mode de réalisation selon l'invention, on peut encore réaliser la pose des câbles hybrides sur une forme à la géométrie identique à la forme visée dans le moule de cuisson. Le bloc sommet est ensuite assemblé avec l'ébauche complémentaire du pneumatique suivant des techniques de transfert connues de l'homme de l'art, puis, toujours suivant des principes connus, le pneumatique est emboîté et mis sous pression par déploiement d'une membrane à l'intérieur du pneumatique.

Ce mode de réalisation garantit aussi l'absence de précontraintes dues à la conformation en presse de vulcanisation.

Tous ces modes de réalisation permettent d'obtenir que les câbles hybrides orientés circonférentiellement soient enroulés en spirale avec des diamètres de pose s'écartant, sur toute la largeur du sommet, de moins de 0,5 % des diamètres finaux de ces câbles dans le pneumatique après vulcanisation.

Un ensemble monté selon un exemple de réalisation de l'invention, utilisable pour équiper un véhicule poids-lourd, comporte une jante, un pneumatique monté sur ladite jante et une membrane de soutien qui est montée sur ladite jante à l'intérieur dudit pneumatique et qui est adaptée pour soutenir ledit pneumatique en cas de chute de la pression à l'intérieur de celui-ci, de telle manière que ledit ensemble monté comporte dans son espace interne deux cavités mutuellement étanches qui sont séparées l'une de l'autre par ladite membrane, laquelle est renforcée en son sommet par au moins une nappe sommet de renforcement et par une nappe sommet de frettage, laquelle comporte des câbles orientés selon la direction circonférentielle dudit ensemble monté.

Cet ensemble monté est tel que ladite nappe sommet de frettage est constituée du tissu composite selon l'invention tel que défini précédemment.

La cavité interne à cette membrane est destinée à être gonflée à une pression supérieure à celle de la cavité restante du pneumatique. Dans ces conditions usuelles d'utilisation, la membrane a un rayon de roulement au sommet qui est inférieur au rayon écrasé du pneumatique utilisé à sa pression recommandée.

En cas de crevaison du pneumatique, dès que la différence de pression entre la cavité interne à la membrane et celle du pneumatique dépasse une valeur donnée, la nappe sommet de frettage de la membrane se rompt, entraînant le déploiement de la membrane sous le pneumatique et permettant ainsi à l'ensemble monté de poursuivre son roulage dans des conditions acceptables en mode dégradé. On pourra se reporter au document de brevet WO-A-98/23457 pour une description du fonctionnement général de cet ensemble monté.

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant réalisée en référence avec les dessins joints, parmi lesquels :
La Fig. 1 est un graphique illustrant la caractéristique force-allongement d'un câble hybride guipé selon l'invention,
la Fig. 2 est une vue en demi-coupe axiale d'un pneumatique comportant une nappe sommet de frettage disposée selon un exemple de réalisation de l'invention,
la Fig. 3 est une vue en demi-coupe axiale d'un pneumatique comportant une nappe sommet de frettage disposée selon un autre exemple de réalisation de l'invention,
la Fig. 4 est une vue en demi-coupe axiale d'un pneumatique comportant une nappe sommet de frettage disposée selon un autre exemple de réalisation de l'invention,
la Fig. 5 est une vue en demi-coupe axiale d'un pneumatique comportant une nappe sommet de frettage disposée selon un autre exemple de réalisation de l'invention,
les Figs. 6 et 7 représentent respectivement, d'une manière schématique, des sections méridiennes diamétralement opposées d'un ensemble monté comportant une jante, un pneumatique et une membrane de sécurité, lorsque le pneumatique est écrasé sous charge et roule sous des conditions normales, et
les Figs. 8 et 9 représentent respectivement, d'une manière schématique à l'instar des Figs. 6 et 7, les sections méridiennes du même ensemble monté qui est soumis à un roulage en mode dégradé.

### Exemple de réalisation d'un câble hybride guipé selon l'invention :

On a réalisé un câble hybride guipé selon l'invention en réalisant séparément, en sens inverse et selon un même pas de torsion :
- d'une part, un fil tordu sur lui-même (communément appelé « surtors » par l'homme du métier) à base d'un filé en polyamide 6,6 de titre égal à 94 tex qui est destiné à constituer l'âme du câble et,
- d'autre part, un fil à base de deux filés retordus ensemble (communément appelé « retors » par l'homme du métier) en Kevlar® (aramide), présentant chacun un titre égal à 167 tex, ce fil étant destiné à constituer la guipe dudit câble.

Plus précisément, le filé d'âme est tordu dans le sens S selon un pas de 200 tours/mètre (S200), et les filés de guipe sont tordus ensemble dans le sens Z selon un même pas (Z200).

On enroule ensuite en hélice le fil de guipe sur le fil d'âme en imprimant une torsion supplémentaire de 115 tours/mètre, au moyen d'un dispositif de câblage volumétrique et d'un métier de type à anneaux, cette torsion supplémentaire étant réalisée dans le sens de surtorsion (S) de l'âme, de telle manière que le pas de torsion de l'âme dans le câble guipé soit de 315 tours/mètre dans le sens S, et que celui de la guipe dans ledit câble soit de 85 tours/mètre dans le sens Z.

On a ensuite procédé à l'encollage du câble hybride guipé ainsi obtenu, en utilisant une tension de traitement de 0,25 daN.

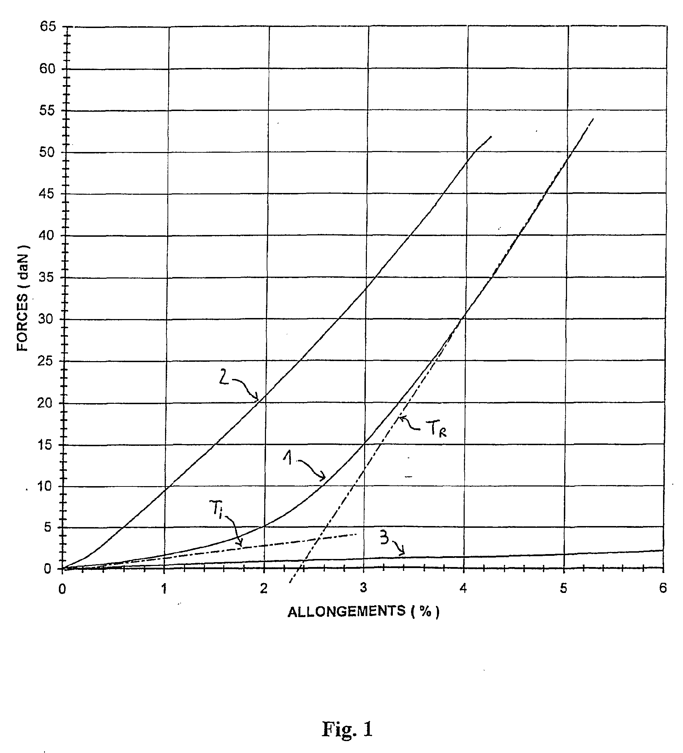

La Fig. 1 montre la courbe force-allongement obtenue pour ce câble hybride guipé encollé selon l'invention (référence 1 sur cette Fig. 1), en comparaison :
- de la courbe 2 d'un fil de type retors, qui est constitué de deux filés de Kevlar® tordus ensemble (présentant chacun un titre de 167 tex et étant tordus selon un pas de 315 tours/mètre), et
- de la courbe 3 d'un filé en polyamide 6,6 (présentant un titre de 94 tex et tordu sur lui-même selon un pas de 300 tours/mètre).

On a représenté également sur cette Fig. 1 les tangentes à la courbe 1 du câble hybride guipé selon l'invention, d'une part, pour un allongement nul (tangente Tᵢ) et, d'autre part, pour un allongement correspondant à la rupture du câble (tangente T_{R}). Ces tangentes se croisent en un point de transition correspondant à un allongement du câble d'environ 2,5 %.

Le calcul des pentes de ces tangentes Tᵢ et T_{R} donne les modules tangents initiaux et finaux du câble pour un allongement nul et à la rupture, respectivement. On en déduit le rapport (module tangent final / module tangent initial) dudit câble.

On obtient, pour la tangente T_{R}, une pente d'environ 1,01 daN et, pour la tangente Tᵢ, une pente d'environ 0,078 daN, d'où une valeur de 12,95 pour la valeur du rapport (module tangent final / module tangent initial) du câble hybride guipé selon l'invention.

Ce découplage très significatif des modules tangents à faibles et fortes déformations se traduit par le fait que la courbe force-allongement du câble hybride guipé selon l'invention est très proche du tracé des tangentes Tᵢ et T_{R}.

On notera qu'à des déformations réduites inhérentes à une vitesse de roulage inférieure à 120 km/h par exemple, le module en extension du câble hybride guipé correspond sensiblement à celui de l'âme qu'il comporte (voir sur la Fig. 1 les pentes analogues des caractéristiques 1 et 3 à faible allongement), ce qui se traduit par un bruit au roulage réduit, lorsque ce câble est utilisé comme élément de renforcement d'une nappe sommet de frettage d'un pneumatique.

On notera également qu'à des déformations élevées inhérentes à une vitesse de roulage par exemple supérieure à 120 km/h, le module en extension du câble hybride guipé correspond sensiblement à celui de la guipe qu'il comporte (voir sur la Fig. 1 les pentes analogues des caractéristiques 1 et 2 à allongement élevé), ce qui se traduit par une fonction de frettage satisfaisante de la nappe sommet renforcée par ces câbles.

Les deux séries d'essais suivantes permettent d'illustrer les avantages procurés par les câbles hybrides guipés selon l'invention dans des nappes sommet de frettage de pneumatique.

### Première série d'essais de roulage d'un véhicule équipé de pneumatiques tourisme dont le sommet comporte deux nappes sommet de renforcement croisées et une nappe sommet de frettage.

Ces essais concernent des pneumatiques A, B et C de dimensions 235/55-17 destinés à équiper des véhicules rapides de type tourisme. Le bloc sommet de chacun de ces pneumatiques comporte deux nappes de renforcement croisées comportant chacune des câbles métalliques 6.23 non frettés au pas de 1,5 mm, ainsi qu'une nappe sommet de frettage comportant des câbles orientés dans la direction circonférentielle du pneumatique.

Dans le cas des pneumatiques A, les câbles de cette nappe sommet de frettage sont constitués de polyamide 6,6 (solution classique de frettage de pneumatique «haute performance »). Pour obtenir une résistance à la vitesse acceptable, cette nappe est disposée en deux couches superposées par une technique d'enroulement en spirale d'une bande de câbles enrobés dans du caoutchouc. La densité de ces câbles est de 200 câbles par dm.

Dans le cas des pneumatiques B, les câbles de cette nappe sommet de frettage sont constitués d'aramide. Cette nappe est disposée en une seule couche avec une densité de câbles de 50 câbles par dm.

Dans le cas des pneumatiques C, les câbles de cette nappe sommet de frettage sont constitués des câbles hybrides guipés selon l'invention fabriqués selon l'exemple de réalisation ci-dessus (à base d'une guipe en aramide enroulée en hélice sur une âme en polyamide 6,6). Cette nappe est également disposée en une seule couche avec une densité de câbles de 50 câbles par dm.

Quatre tests ont été réalisés pour chacun de ces pneumatiques A, B et C :
- « bourdonnement de caisse » : ce test est représentatif pour un passager de la gêne acoustique provoquée au passage du véhicule à vitesse constante sur un sol de granulométrie moyenne, de type routier. On fait passer un véhicule à une vitesse donnée sur une aire de mesure normalisée, et des microphones enregistrent le niveau de bruit en dB(A) ;
- bruit « bord de piste » ou « coast by » : ce test est représentatif pour un riverain de la gêne acoustique provoquée au passage du véhicule à vitesse constante sur un sol de granulométrie intermédiaire, de type autoroutier. On fait passer le véhicule à une vitesse donnée, boîte de vitesse au point mort et moteur coupé, sur une aire de mesure normalisée (norme ISO DIS 10 844), et des microphones enregistrent les niveaux de bruit en dB(A) ;
- « contact » : ce test est représentatif pour un passager de la gêne vibratoire et acoustique provoquée au passage du véhicule à vitesse constante sur un obstacle de type plaque d'égout. On fait passer sur cette plaque le véhicule à une vitesse donnée, et l'opérateur apprécie le niveau vibratoire et acoustique puis traduit le gain (-) ou la déchéance (+) sur une échelle de -2 à +2, le pneumatique « témoin » (référence) étant à 0 ;
- résistance à la vitesse : à charge et pression de gonflage données, on augmente progressivement la vitesse du pneumatique jusqu'à la destruction de celui-ci, et le résultat du test est donné par la vitesse maximale atteinte et par l'observation de la cause de la destruction du pneumatique.

Les tableaux 1 et 2 ci-après présentent les résultats obtenus.

**Tableau 1 :**

| **Pneumatiques** | Nappe sommet frettage | Densité nappe° (câbles/dm) | Bourdonnement caisse | Bruit bord de piste | Contact | Résistance à la vitesse |
|---|---|---|---|---|---|---|
| **A** | Polyamide 6,6 | Bi-couche - 200 | référence | référence | référence | 100 |
| **C** | hybrides guipés | Monocouche - 50 | -0,4 dB(A) | égal à référence | -0,5 pts | 110 |

Ce tableau 1 montre que les câbles hybrides guipés utilisés dans la nappe sommet de frettage confèrent aux pneumatiques C selon l'invention, par rapport aux pneumatiques A « témoin » incorporant des câbles de polyamide 6,6 dans la nappe sommet de frettage, une amélioration de la résistance à la vitesse ainsi qu'une réduction du bruit de « bourdonnement de caisse » et de « contact », en dépit de la densité de câbles inférieure à celle utilisée dans ces pneumatiques A « témoin ».

On notera que ces câbles hybrides guipés ne pénalisent pas le bruit « bord de piste » des pneumatiques C selon l'invention, par rapport à celui des pneumatiques « témoin » A.

**Tableau 2 :**

| **Pneumatiques** | Nappe sommet frettage | Densité nappe° (câbles/dm) | Bruit bord de piste | Résistance à la vitesse |
|---|---|---|---|---|
| **B** | aramide | Monocouche - 50 | référence | 100 |
| **C** | hybrides guipés | Monocouche - 50 | -2 dB (A) | 100 |

Ce tableau 2 montre que, en considérant le pneumatique B comme « témoin », les câbles hybrides guipés confèrent au pneumatique C selon l'invention une forte réduction du bruit « bord de piste », sans que la résistance à la vitesse ne soit pénalisée.

### Seconde série d'essais de roulage d'un véhicule équipé de pneumatiques tourisme dont le sommet comporte deux nappes sommet de renforcement croisées, deux autres nappes sommet de renforcement et une nappe sommet de frettage.

Ces essais concernent également des pneumatiques D et E de dimensions 235/55-17 destinés à équiper des véhicules rapides de type tourisme. Le bloc sommet de chacun de ces pneumatiques comporte deux nappes de renforcement croisées comportant chacune des câbles métalliques 2.23 non frettés au pas de 0,7 mm, deux autres nappes sommet de renforcement comportant chacune des câbles métalliques 4.23 non frettés au pas de 1,25 mm, ainsi qu'une nappe sommet de frettage comportant des câbles orientés dans la direction circonférentielle du pneumatique.

Dans le cas des pneumatiques D, les câbles de cette nappe sommet de frettage sont constitués de polyamide 6,6. Cette nappe est disposée en deux couches superposées par une technique d'enroulement en spirale d'une bande de câbles enrobés dans du caoutchouc. La densité de ces câbles est de 200 câbles par dm.

Dans le cas des pneumatiques E, les câbles de cette nappe sommet de frettage sont constitués des câbles hybrides guipés selon l'exemple de réalisation de l'invention ci-dessus (à base d'une guipe en aramide enroulée en hélice sur une âme en polyamide 6,6). Cette nappe est disposée en une seule couche avec une densité de câbles de 50 câbles par dm.

Un test supplémentaire a été réalisé pour ces pneumatiques D et E :
- détermination de la rigidité de dérive : à vitesse, pression de gonflage et charge données, on impose un angle de dérive et on mesure la poussée de dérive résultante, le résultat s'exprimant en faisant le rapport poussée de dérive / angle de dérive. La mesure est effectuée d'une manière connue entre ± 1 degré d'angle de dérive.

Le tableau 3 ci-après présente les résultats obtenus pour les tests de rigidité de dérive, de « bourdonnement de caisse » (BdC en abrégé ci-dessous) et de « contact ».

**Tableau 3 :**

| **Pneus** | Nappe sommet frettage | Densité nappe (renfort/dm) | Rigidité de dérive | | | BdC | Contact |
|---|---|---|---|---|---|---|---|
| | | | à 0,5 zetrto | à zetrto | à 1,5 zetrto | | |
| **D** | Polyamide 6,6 | Bi-couche-200 | 100 | 100 | 100 | référence | référence |
| **E** | Hybride guipé | Monocouche - 50 | 110 | 115 | 120 | -0,4dB(A) | +0,5pts |

Ce tableau 3 montre que les câbles hybrides guipés utilisés en nappe sommet de frettage confèrent aux pneumatiques E selon l'invention une rigidité de dérive fortement améliorée ainsi que des bruits de « bourdonnement de caisse » et de « contact » réduits, par rapport aux pneumatiques D « témoin ».

### Exemples de disposition dans le pneumatique de nappes sommet de frettage comportant les câbles hybrides guipés selon l'invention :

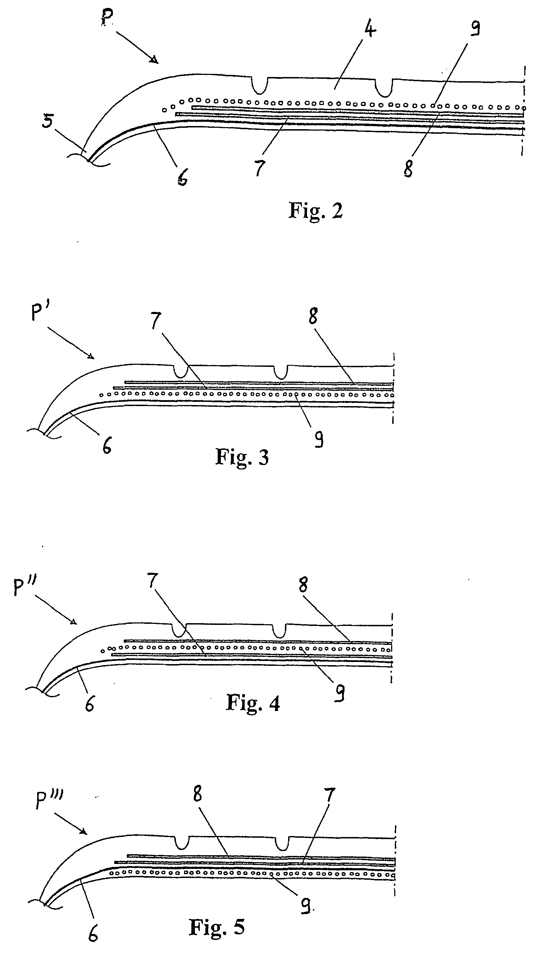

La Fig. 2 présente une demi-coupe axiale d'un pneumatique P selon l'invention, qui comporte un sommet 4 prolongé par deux flancs 5 et deux bourrelets (non représentés).

Le sommet 4 comporte une nappe carcasse 6 ancrée de façon connue dans les deux bourrelets, deux nappes de renforcement 7 et 8 formées de câbles parallèles dans chaque nappe et croisés d'une nappe à la suivante en faisant avec la direction circonférentielle des angles (α, β) de l'ordre de 30 degrés, et une nappe sommet de frettage 9 comportant les câbles hybrides guipés selon l'invention.

Ces câbles hybrides guipés sont enroulés en spirale pour assurer un bon frettage du sommet 4, et ils sont orientés dans la direction circonférentielle du pneumatique P.

La nappe carcasse 6 est de type radiale, étant orientée sensiblement à 90 degrés relativement à cette direction circonférentielle.

La Fig. 3 présente une demi-coupe axiale partielle d'un pneumatique P' comportant comme précédemment une nappe carcasse 6, deux nappes de renforcement croisées 7, 8, et une nappe sommet de frettage 9 qui est disposée radialement entre la nappe carcasse 6 et les deux nappes de renforcement croisées 7 et 8. Cette disposition a l'avantage de protéger la nappe sommet de frettage 9 d'éventuels dommages dus à des perforations de la bande de roulement.

La Fig. 4 présente une demi-coupe axiale partielle d'un pneumatique P" comportant comme précédemment une nappe carcasse 6, deux nappes de renforcement croisées 7, 8, et une nappe sommet de frettage 9 qui est disposée entre les deux nappes de renforcement croisées 7 et 8.

La Fig. 5 présente une demi-coupe axiale partielle d'un pneumatique P"' comportant comme précédemment une nappe carcasse 6, deux nappes de renforcement croisées 7, 8, et une nappe sommet de frettage 9 disposée radialement à l'intérieur de la nappe carcasse 6.

On notera que les câbles hybrides guipés selon l'invention confèrent aux pneumatiques P, P', P" ou P'" dont la nappe sommet de frettage 9 incorpore ces câbles les avantages précités de réduction de bruit de roulage à vitesse réduite et de frettage satisfaisant à vitesse élevée.

### Exemple de réalisation d'un ensemble monté selon l'invention destiné à équiper un véhicule poids-lourd :

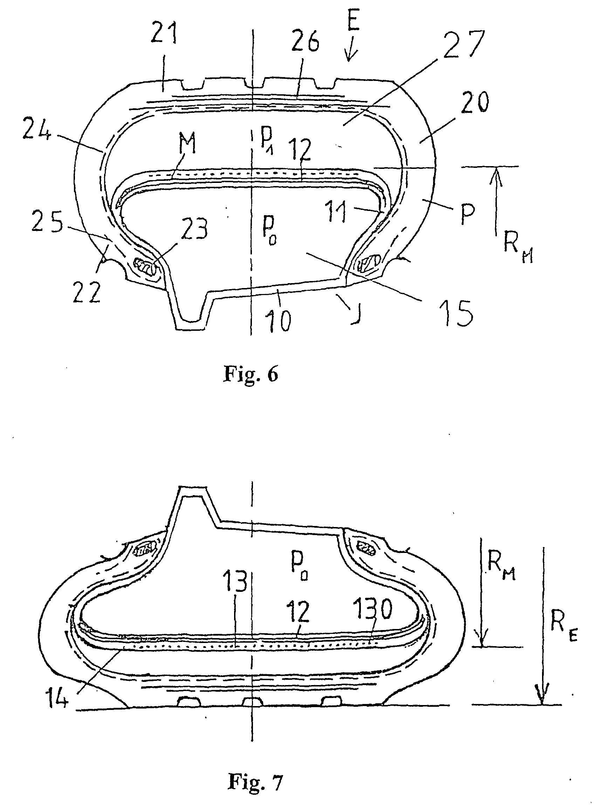

Les Figs. 6 et 7 présentent un ensemble monté E selon l'invention pour véhicule poids-lourd comportant un pneumatique P, une jante de montage J et une membrane de soutien M.

Le pneumatique P comporte classiquement des flancs 20 réunis radialement à l'extérieur à une bande de roulement 21, et prolongés radialement à l'intérieur par deux bourrelets 22, chaque bourrelet étant renforcé par au moins une tringle 23 autour de laquelle vient s'ancrer une armature de carcasse radiale 24 pour former des retournements 25. L'armature de carcasse 24 est surmontée radialement dans le sommet par une armature de sommet 26, composée d'au moins deux nappes de fils ou câbles métalliques parallèles entre eux dans chaque nappe et croisés d'une nappe à la suivante en faisant avec la direction circonférentielle du pneumatique P un angle pouvant être compris entre 5° et 45°.

Le pneumatique P est dit sans chambre, et comprend une couche intérieure constituée d'une composition de caoutchouc imperméable aux gaz de gonflage. L'ensemble pneumatique P et jante J définit une première cavité interne 27 étanche.

La membrane de soutien pneumatique M définit à l'intérieur de la première cavité 27 une seconde cavité 15 étanche. Cette membrane M est fermée, comporte des flancs 11 et est renforcée en son sommet par une armature de sommet 12. Cette dernière, facilement expansible, est associée à une armature de frettage 13 composée par exemple d'une nappe sommet de frettage 130 de câbles orientés circonférentiellement.

Selon l'invention, ces câbles circonférentiels de la nappe sommet de frettage 130 sont des câbles hybrides guipés conformes à l'invention, par exemple constitués d'une guipe en aramide enroulée en hélice sur une âme en polyamide 6,6.

Ces câbles hybrides guipés permettent à la nappe 130 d'assurer une fonction de frettage satisfaisante de la membrane M, d'une part, contre les efforts dus à la force centrifuge et, d'autre part, contre les efforts dus au différentiel de pression p₀ - p₁, p₀ étant la pression de gonflage dans la cavité 15 de la membrane de soutien M, égale par exemple à 9,5.10⁵ Pa, et p₁ étant la pression dans la cavité 27 du pneumatique P égale par exemple à 9,0.10⁵ Pa. Ces valeurs de gonflage sont les valeurs nominales à froid dans l'exemple choisi.

Cette fonction de frettage permet à la membrane M de conserver, dans les conditions normales de roulage de l'ensemble monté E, c'est-à-dire dans les conditions de charge, de pression et de vitesse recommandées pour le pneumatique P concerné, un rayon R_{M} pratiquement constant et inférieur au rayon R_{E} écrasé du pneumatique P (la Fig. 7 représentant la partie écrasée de l'ensemble monté E dans les conditions normales de roulage).

La membrane M est complétée par le recouvrement de l'armature de frettage 13, par une couche de caoutchouc 14 de faible épaisseur.

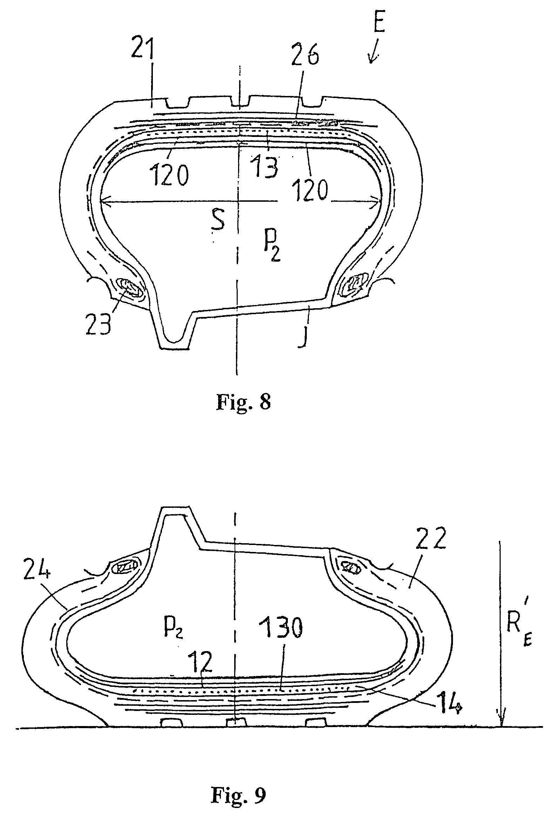

Lorsque le pneumatique P perd de la pression interne, de manière lente ou subite, et quelle que soit la raison de cette perte de pression (p₁ décroît), la différence de pression p₀ - p₁ augmente jusqu'à devenir telle que les câbles de la nappe 130 se rompent et permettent ainsi l'expansion de la membrane de soutien M jusqu'à occupation complète de la cavité 27 du pneumatique P (voir Figs. 8 et 9).

L'augmentation de volume entraînant une diminution de la pression intérieure p₀ initiale de la membrane M, l'ensemble monté E opère sous une pression p₂ inférieure, conduisant à un rayon écrasé R'_{E} en roulage en mode dégradé inférieur au rayon écrasé R_{E} en roulage normal (voir Fig. 9). Le rayon R'_{E} permet cependant un roulage à vitesse modérée jusqu'à la prochaine aire d'entretien sans dégradation majeure du pneumatique P et sans intervention humaine, aire d'entretien où il est alors possible d'apporter le supplément de pression nécessaire pour obtenir un rayon très voisin du rayon R_{E} et permettre un roulage sous des conditions pratiquement normales.

## Revendications

1. Câble hybride, **caractérisé en ce qu'**il présente un rapport (module tangent final/module tangent initial) supérieur à 10.

2. Câble hybride selon la revendication 1, **caractérisé en ce que** ledit rapport (module tangent final/ module tangent initial) est supérieur à 12.

3. Câble hybride selon la revendication 1 ou 2, **caractérisé en ce qu'**il comporte une âme textile de module initial inférieur à 900 cN/tex et une guipe textile de module initial supérieur à 1300 cN/tex qui est enroulée sur ladite âme.

4. Câble hybride selon la revendication 3, **caractérisé en ce que** ladite âme présente un allongement à la rupture supérieur à 10 %.

5. Câble hybride selon la revendication 3 ou 4, **caractérisé en ce qu'**il présente une courbe force-allongement présentant un point de transition correspondant à un allongement compris entre 1 % et 7 %, ledit câble présentant un module en extension qui est sensiblement égal au module initial de ladite âme en deçà dudit point, et qui est sensiblement égal au module initial de ladite guipe au-delà dudit point.

6. Câble hybride selon la revendication 5, **caractérisé en ce que** ledit point de transition correspond à un allongement compris entre 2 % et 4 %.

7. Câble hybride selon une des revendications 3 à 6, **caractérisé en ce que** ladite âme et ladite guipe sont constituées chacune d'un fil unique ou de plusieurs fils retordus ensemble, ledit ou chaque fil étant formé soit d'un filé à base d'une multitude de filaments élémentaire, soit d'un monofilament.

8. Câble hybride selon la revendication 7, **caractérisé en ce que** ladite âme est constituée d'un filé unique et **en ce que** ladite guipe est constituée d'un ou de plusieurs filés retordus ensemble.

9. Câble hybride selon la revendication 7, **caractérisé en ce que** ladite âme est constituée de plusieurs filés retordus ensemble et **en ce que** ladite guipe est constituée d'un ou de plusieurs filés retordus ensemble.

10. Câble hybride selon la revendication 7, **caractérisé en ce que** ladite âme est constituée d'un monofilament et **en ce que** ladite guipe est constituée d'un filé unique ou de plusieurs filés retordus ensemble.

11. Câble hybride selon la revendication 7, **caractérisé en ce que** ladite âme est constituée d'un filé unique ou de plusieurs filés retordus ensemble et **en ce que** ladite guipe est constituée d'un monofilament.

12. Câble hybride selon la revendication 7, **caractérisé en ce que** ladite âme et ladite guipe sont chacune constituées d'un monofilament.

13. Procédé d'obtention d'un câble hybride selon une des revendications 3 à 12, **caractérisé en ce qu'**il consiste essentiellement à enrouler en hélice ladite guipe sur ladite âme, de telle manière que le pas de torsion de l'âme dans le câble soit supérieur à celui de la guipe.

14. Tissu composite utilisable dans un pneumatique (P, P', P", P"'), **caractérisé en ce qu'**il comporte une composition de caoutchouc à base d'au moins un élastomère diénique qui est renforcée par des câbles hybrides selon une des revendications 1 à 12.

15. Tissu composite selon la revendication 14, **caractérisé en ce que** ladite composition de caoutchouc est à base d'au moins un élastomère diénique dont le taux molaire d'unités issues de diènes conjugués est supérieur à 15 %.

16. Tissu composite selon la revendication 15, **caractérisé en ce que** ladite composition de caoutchouc est à base d'au moins un élastomère diénique appartenant au groupe constitué par les polybutadiènes, le caoutchouc naturel, les polyisoprènes de synthèse, les copolymères de butadiène-styrène, les copolymères d'isoprène-butadiène, les copolymères d'isoprène-styrène et les copolymères de butadiène-styrène-isoprène.

17. Pneumatique (P, P', P", P"') comportant un sommet (4) qui est prolongé par deux flancs (5) et deux bourrelets et qui comporte une nappe carcasse (6) ancrée dans lesdits bourrelets, ledit sommet (4) comportant :
- au moins une nappe sommet de renforcement (7,8) comportant des câbles parallèles qui sont orientés par rapport à la direction circonférentielle d'un angle α compris entre 10 et 45 degrés, et
- au moins une nappe sommet de frettage (9) comportant des câbles orientés selon ladite direction circonférentielle qui sont enroulés en spirale,
**caractérisé en ce que** ladite nappe sommet de frettage (9) est constituée d'un tissu composite selon une des revendications 14 à 16.

18. Pneumatique (P) selon la revendication 17, **caractérisé en ce que** ladite nappe sommet de frettage (9) est disposée radialement à l'extérieur de ladite ou desdites nappes sommet de renforcement (7, 8).

19. Pneumatique (P"') selon la revendication 17, **caractérisé en ce que** ladite nappe sommet de frettage (9) est disposée radialement à l'intérieur de ladite nappe carcasse (6).

20. Pneumatique (P") selon la revendication 17, dans lequel ledit sommet (4) comporte au moins deux nappes sommet de renforcement (7, 8) superposées comportant chacune des câbles parallèles qui sont croisés d'une nappe (7, 8) à l'autre en faisant avec ladite direction circonférentielle des angles (α, β) compris entre 10 et 45 degrés, **caractérisé en ce que** ladite nappe sommet de frettage (9) est disposée entre lesdites nappes sommet de renforcement (7, 8).

21. Pneumatique (P') selon la revendication 17, dans lequel ledit sommet (4) comporte au moins deux nappes sommet de renforcement (7, 8) superposées comportant chacune des câbles parallèles qui sont croisés d'une nappe (7, 8) à l'autre en faisant avec ladite direction circonférentielle des angles (α, β) compris entre 10 et 45 degrés, **caractérisé en ce que** ladite nappe sommet de frettage (9) est disposée entre ladite nappe carcasse (6) et la nappe sommet de renforcement (7) qui est disposée le plus radialement à l'intérieur.

22. Pneumatique (P, P', P", P"') selon une des revendications 17 à 21, **caractérisé en ce que**, sur toute sa largeur, les câbles hybrides de ladite nappe sommet de frettage (9) présentent un potentiel de contraction à chaud (CS), à l'état vulcanisé et neuf dudit pneumatique (P, P', P", P"'), qui est inférieur ou égal au potentiel de contraction à chaud de ces mêmes câbles adhérisés avant leur incorporation dans ladite nappe sommet de frettage (9).

23. Ensemble monté (E) utilisable pour équiper un véhicule poids-lourd, ledit ensemble monté (E) comportant une jante (J), un pneumatique (P) monté sur ladite jante (J) et une membrane de soutien (M) qui est montée sur ladite jante (J) à l'intérieur dudit pneumatique (P) et qui est adaptée pour soutenir ledit pneumatique (P) en cas chute de la pression à l'intérieur de celui-ci, de telle manière que ledit ensemble monté (E) comporte dans son espace interne deux cavités mutuellement étanches (15, 27) qui sont séparées l'une de l'autre par ladite membrane (M), laquelle est renforcée en son sommet par au moins une nappe sommet de renforcement (12) et par une nappe sommet de frettage (130), laquelle comporte des câbles orientés selon la direction circonférentielle dudit ensemble monté (E),
**caractérisé en ce que** ladite nappe sommet de frettage (130) est constituée d'un tissu composite selon une des revendications 14 à 16.

## Claims

1. A hybrid cable, **characterised in that** it has a ratio of final tangent modulus : initial tangent modulus greater than 10.

2. A hybrid cable according to Claim 1, **characterised in that** said ratio of final tangent modulus : initial tangent modulus is greater than 12.

3. A hybrid cable according to Claim 1 or 2, **characterised in that** it comprises a textile core of an initial modulus of less than 900 cN/tex and a textile wrap of an initial modulus greater than 1300 cN/tex which is wound on said core.

4. A hybrid cable according to Claim 3, **characterised in that** said core has an elongation at break greater than 10%.

5. A hybrid cable according to Claim 3 or 4, **characterised in that** it has a force/elongation curve having a transition point corresponding to an elongation of between 1% and 7%, said cable having a tensile modulus which is substantially equal to the initial modulus of said core on this side of said point, and which is substantially equal to the initial modulus of said wrap beyond said point.

6. A hybrid cable according to Claim 5, **characterised in that** said transition point corresponds to an elongation of between 2% and 4%.

7. A hybrid cable according to one of Claims 3 to 6, **characterised in that** said core and said wrap are each formed of a single thread or a plurality of threads twisted together, said or each thread being formed either of a spun yarn based on a multitude of elementary filaments, or of a monofilament.

8. A hybrid cable according to Claim 7, **characterised in that** said core is formed of a single spun yarn and that said wrap is formed of one or more spun yarns twisted together.

9. A hybrid cable according to Claim 7, **characterised in that** said core is formed of a plurality of spun yarns twisted together and **in that** said wrap is formed of one or more spun yarns twisted together.

10. A hybrid cable according to Claim 7, **characterised in that** said core is formed of a monofilament and **in that** said wrap is formed of a single spun yarn or of a plurality of spun yarns twisted together.

11. A hybrid cable according to Claim 7, **characterised in that** said core is formed of a single spun yarn or a plurality of spun yarns twisted together and **in that** said wrap is formed of a monofilament.

12. A hybrid cable according to Claim 7, **characterised in that** said core and said wrap are each formed of a monofilament.

13. A process for obtaining a hybrid cable according to one of Claims 3 to 12, **characterised in that** it consists essentially of winding said wrap on said core in a helix, such that the twisting pitch of the core in the cable is greater than that of the wrap.

14. A composite fabric usable in a tyre (P, P', P", P"'), **characterised in that** it comprises a rubber composition based on at least one diene elastomer which is reinforced by hybrid cables according to one of Claims 1 to 12.

15. A composite fabric according to Claim 14, **characterised in that** said rubber composition is based on at least one diene elastomer the molar ratio of units originating from conjugated dienes of which is greater than 15%.

16. A composite fabric according to Claim 15, **characterised in that** said rubber composition is based on at least one diene elastomer belonging to the group consisting of polybutadienes, natural rubber, synthetic polyisoprenes, butadiene/styrene copolymers, isoprene/butadiene copolymers, isoprene/styrene copolymers and butadiene/styrene/isoprene copolymers.

17. A tyre (P, P', P", P"') comprising a crown (4) which is extended by two sidewalls (5) and two beads and which comprises a carcass ply (6) anchored in said beads, said crown (4) comprising:
- at least one reinforcing crown ply (7, 8) comprising parallel cables which are oriented relative to the circumferential direction by an angle α of between 10 and 45 degrees, and
- at least one hooping crown ply (9) comprising cables oriented in said circumferential direction which are wound in a spiral,
**characterised in that** said hooping crown ply (9) is made of a composite fabric according to one of Claims 14 to 16.

18. A tyre (P) according to Claim 17, **characterised in that** said hooping crown ply (9) is arranged radially to the outside of said reinforcing crown ply (plies) (7, 8).

19. A tyre (P"') according to Claim 17, **characterised in that** said hooping crown ply (9) is arranged radially to the inside of said carcass ply (6).

20. A tyre (P") according to Claim 17, in which said crown (4) comprises at least two superposed reinforcing crown plies (7, 8) each comprising parallel cables which are crossed from one ply (7, 8) to the other, forming with said circumferential direction angles (α, β) of between 10 and 45 degrees, **characterised in that** said hooping crown ply (9) is arranged between said reinforcing crown plies (7, 8).

21. A tyre (P') according to Claim 17, in which said crown (4) comprises at least two superposed reinforcing crown plies (7, 8) each comprising parallel cables which are crossed from one ply (7, 8) to the other, forming with said circumferential direction angles (α, β) of between 10 and 45 degrees, **characterised in that** said hooping crown ply (9) is arranged between said carcass reinforcement (6) and the reinforcing crown ply (7) located radially furthest to the inside.

22. A tyre (P, P', P", P"') according to one of Claims 17 to 21, **characterised in that**, over its entire width, the hybrid cables of said hooping crown ply (9) have a high-temperature contraction potential (CS), in the vulcanised, new state of said tyre (P, P', P", P"'), which is less than or equal to the high-temperature contraction potential of these same cables which have been adherised before their incorporation into said hooping crown ply (9).

23. A mounted assembly (E) usable for fitting on a heavy vehicle, said mounted assembly (E) comprising a rim (J), a tyre (P) mounted on said rim (J) and a support membrane (M) which is mounted on said rim (J) within said tyre (P) and which is adapted to support said tyre (P) in the event of a drop in the pressure within said tyre, such that said mounted assembly (E) comprises in its inner space two mutually airtight cavities (15, 27) which are separated from each other by said membrane (M), which is reinforced in its crown by at least one reinforcing crown ply (12) and by a hooping crown ply (130), which comprises cables oriented in the circumferential direction of said mounted assembly (E),
**characterised in that** said hooping crown ply (130) is made of a composite fabric according to one of Claims 14 to 16.

## Patentansprüche

1. Hybridseil, **dadurch gekennzeichnet, dass** es einen Quotienten (Endtangentenmodul/Anfangstangentenmodul) größer als 10 aufweist.

2. Hybridseil nach Anspruch 1, **dadurch gekennzeichnet, dass** dieser Quotient (Endtangentenmodul/Anfangstangentenmodul) größer als 12 ist.

3. Hybridseil nach Anspruch 1 oder 2, **dadurch gekennzeichnet, dass** es eine Textilseele mit einem Anfangsmodul kleiner als 900 cN/tex und einen Textilmantel mit einem Anfangsmodul größer als 1300 cN/tex aufweist, der auf die Seele gewickelt ist.

4. Hybridseil nach Anspruch 3, **dadurch gekennzeichnet, dass** die Seele eine Bruchdehnung von mehr als 10 % aufweist.

5. Hybridseil nach Anspruch 3 oder 4, **dadurch gekennzeichnet, dass** es eine Kraft-Dehnungs-Kurve aufweist, die einen Übergangspunkt aufweist, der einer Dehnung entspricht, die im Bereich von 1 bis 7 % liegt, wobei das Seil einen Dehnmodul aufweist, der diesseits dieses Punktes in etwa dem Anfangsmodul der Seele entspricht und der jenseits dieses Punktes in etwa dem Anfangsmodul des Mantels entspricht.

6. Hybridseil nach Anspruch 5, **dadurch gekennzeichnet, dass** der Übergangspunkt einer Dehnung entspricht, die im Bereich von 2 bis 4 % liegt.

7. Hybridseil nach einem der Ansprüche 3 bis 6, **dadurch gekennzeichnet, dass** sowohl die Seele als auch der Mantel aus einem einzigen Faden oder mehreren zusammengedrehten Fäden besteht, wobei der Faden oder jeder Faden entweder aus einem Garn auf der Basis einer Vielzahl von Elementarfilamenten oder aus einem Monofilament besteht.

8. Hybridseil nach Anspruch 7, **dadurch gekennzeichnet, dass** die Seele aus einem einzigen Garn besteht und dass der Mantel aus einem Garn oder mehreren zusammengedrehten Garnen besteht.

9. Hybridseil nach Anspruch 7, **dadurch gekennzeichnet, dass** die Seele aus mehreren zusammengedrehten Garnen besteht und dass der Mantel aus einem Garn oder mehreren zusammengedrehten Garnen besteht.

10. Hybridseil nach Anspruch 7, **dadurch gekennzeichnet, dass** die Seele aus einem Monofilament besteht und dass der Mantel aus einem einzigen Garn oder mehreren zusammengedrehten Garnen besteht.

11. Hybridseil nach Anspruch 7, **dadurch gekennzeichnet, dass** die Seele aus einem einzigen Garn oder mehreren zusammengedrehten Garnen besteht und dass der Mantel aus einem Monofilament besteht.

12. Hybridseil nach Anspruch 7, **dadurch gekennzeichnet, dass** sowohl die Seele als auch der Mantel aus einem Monofilament besteht.

13. Verfahren zur Herstellung eines Hybridseils nach einem der Ansprüche 3 bis 12, **dadurch gekennzeichnet, dass** es im wesentlichen darin besteht, den Mantel helixförmig auf die Seele zu wickeln, so dass die Schlaglänge der Wicklung der Seele in dem Seil größer als die Schlaglänge der Wicklung des Mantels ist.

14. Verbundgewebe, verwendbar in einem Luftreifen (P, P', P", P"'), **dadurch gekennzeichnet, dass** es eine Kautschukzusammensetzung auf der Basis mindestens eines Dienelastomers umfasst, das mit Hybridseilen nach einem der Ansprüche 1 bis 12 verstärkt ist.

15. Verbundgewebe nach Anspruch 14, **dadurch gekennzeichnet, dass** die Kautschukzusammensetzung eine Zusammensetzung auf der Basis mindestens eines Dienelastomers ist, dessen molarer Gehalt an Einheiten, die von konjugierten Dienen abstammen, größer als 15 % ist.

16. Verbundgewebe nach Anspruch 15, **dadurch gekennzeichnet, dass** die Kautschukzusammensetzung eine Zusammensetzung auf der Basis mindestens eines Dienelastomers ist, das zu der Gruppe gehört, die aus den Polybutadienen, Naturkautschuk, den Synthesepolyisoprenen, den Butadien-Styrol-Copolymeren, den Isopren-Butadien-Copolymeren, den Isopren-Styrol-Copolymeren und den Butadien-Styrol-Isopren-Copolymeren besteht.

17. Luftreifen (P, P', P", P"'), der einen Scheitel (4) umfasst, an den sich zwei Seitenwände (5) und zwei Wülste anschließen und der eine Karkasslage (6) aufweist, die in den Wülsten verankert ist, wobei der Scheitel (4) umfasst:
- mindestens eine Verstärkungsscheitellage (7, 8), die parallele Seile enthält, die, bezogen auf die Umfangsrichtung, mit einem Winkel α orientiert sind, der im Bereich von 10 bis 45 Grad liegt, und
- mindestens eine Umschnürungsscheitellage (9), die Seile enthält, die in dieser Umfangsrichtung orientiert sind, die spiralförmig gewickelt sind,
**dadurch gekennzeichnet, dass** die Umschnürungsscheitellage (9) aus einem Verbundgewebe nach einem der Ansprüche 14 bis 16 besteht.

18. Luftreifen (P) nach Anspruch 17, **dadurch gekennzeichnet, dass** die Umschnürungsscheitellage (9) in radialer Richtung auf der Außenseite der Verstärkungsscheitellage(n) (7, 8) angeordnet ist.

19. Luftreifen (P"') nach Anspruch 17, **dadurch gekennzeichnet, dass** die Umschnürungsscheitellage (9) in radialer Richtung auf der Innenseite der Karkasslage (6) angeordnet ist.

20. Luftreifen (P") nach Anspruch 17, in dem der Scheitel (4) mindestens zwei übereinander angeordnete Verstärkungsscheitellagen (7, 8) aufweist, von denen jede parallele Seile aufweist, die von einer Lage (7, 8) zur anderen sich kreuzend angeordnet sind und mit der Umfangsrichtung Winkel (α, β) bilden, die im Bereich von 10 bis 45 Grad liegen, **dadurch gekennzeichnet, dass** die Umschnürungsscheitellage (9) zwischen diesen Verstärkungsscheitellagen (7, 8) angeordnet ist.

21. Luftreifen (P') nach Anspruch 17, in dem der Scheitel (4) mindestens zwei übereinander angeordnete Verstärkungsscheitellagen (7, 8) aufweist, von denen jede parallele Seile aufweist, die von einer Lage (7, 8) zur anderen sich kreuzend angeordnet sind und mit der Umfangsrichtung Winkel (α, β) bilden, die im Bereich von 10 bis 45 Grad liegen, **dadurch gekennzeichnet, dass** die Umschnürungsscheitellage (9) zwischen der Karkasslage (6) und der Verstärkungsscheitellage (7) angeordnet ist, die in radialer Richtung am weitesten innen liegt.

22. Luftreifen (P, P', P", P"') nach einem der Ansprüche 17 bis 21, **dadurch gekennzeichnet, dass**, über die gesamte Breite, die Hybridseile der Umschnürungsscheitellage (9) im vulkanisierten und neuen Zustand des Luftreifens (P, P', P", P"') ein Kontraktionsvermögen in der Hitze (CS) aufweisen, das kleiner als oder gleich groß wie das Kontraktionsvermögen in der Hitze dieser gleichen mit einem Haftvermittler behandelten Seile vor ihrem Einbringen in die Umschnürungsscheitellage (9) ist.

23. Montierte Einheit (E), die für die Ausrüstung eines Lastwagens verwendbar ist, wobei die montierte Einheit (E) eine Felge (J), einen Luftreifen (P), der auf der Felge (J) montiert ist, und eine Stützmembran (M), die im Inneren des Luftreifens (P) auf der Felge (J) montiert ist und die an das Stützen des Luftreifens (P) im Fall eines Druckabfalls im Inneren des Reifens angepasst ist, in einer solchen Weise umfasst, dass die montierte Einheit (E) in ihrem Innenraum zwei gegeneinander abgedichtete Hohlräume (15, 27) aufweist, die voneinander durch diese Membran (M) getrennt sind, die auf ihrem Scheitel mit mindestens einer Verstärkungsscheitellage (12) und mit einer Umschnürungsscheitellage (130) verstärkt ist, die Seile enthält, die in Umfangsrichtung der montierten Einheit (E) orientiert sind,
**dadurch gekennzeichnet, dass** die Umschnürungsscheitellage (130) aus einem Verbundgewebe nach einem der Ansprüche 14 bis 16 besteht.
